# EUROPEAN PATENT APPLICATION

(11) **EP 1 796 292 A1**
(43) Date of publication of application: **13.06.2007**
(21) Application number: 05768518.2
(22) Date of filing: 27.07.2005
(51) Int. Cl.: H04B 7/26

(54) **PRESENCE INFORMATION NOTIFYING SYSTEM AND METHOD, COMPUTER PROGRAM, CHARGING SYSTEM, CHARGING APPARATUS, AND MOBILE DEVICE**

(30) Priority: 27.07.2004 JP 2004219224
(71) Applicant: NEC Corporation, Minato-ku Tokyo 108-8001 (JP)
(72) Inventor: KOMATSU, Kenichi, , Tokyo 1088001; (JP)
(74) Representative: Vossius & Partner
(86) International application number: PCT/JP2005/014133
(87) International publication number: WO 2006/011628

(57) **Abstract**

A presence information notification system is provided which generates presence information indicating where or whether or not a user is present and notifies a terminal of the generated information substantially without requiring the user to perform any intentional operation therefor.
The system includes: a portable device carried by the user; an installed device installed at a predetermined position and having a memory device A storing an identifier A for identifying the individual installed device, detection means, for detecting the portable device, and means for performing data communication via a data communication network; a first memory device storing association relationship between positional information indicating the position where the installed device is installed and the identifier A of the installed device installed at the position indicated by the positional information; and a server having means for performing data communication via a data communication network.

## Description

### TECHNICAL FIELD

The present invention relates to a technique for generating information about presence of a user, such as information indicating whether a user is present or not at a predetermined position, information about the user, and information about the state of the user, and for notifying a predetermined terminal of a message. Hereafter, such information shall be collectively referred to as the "presence information". The presence information relating to a specific user, such as the user's name, department, and address shall be referred to as "user information", while the presence information relating to the state of the user shall be referred to as "state information".

### BACKGROUND ART

There exist techniques to notify predetermined other users of presence information of a user via a data communication network represented by Internet.

One of such representative techniques is Instant Messenger implemented on personal computers. Instant Messenger generates presence information such as "at desk" or "not at desk" according to operation by a user of a personal computer or according to a predetermined setting, and notifies other users' Instant Messenger. The operation here is a series of operations conducted by the user himself/herself using an input device such as a keyboard or a mouse. The setting here is for example a length of time elapsed from the last input operation conducted by the user using the input device. The elapsed time from the last input operation is measured with a timer, and the Instant Messenger sends a predetermined message to other users when the elapsed time exceeds a set period of time.

Other conventional techniques include PoC (Push-to-Talk over Cellular) service utilizing a mobile communication terminal represented by a cellular phone. The PoC service notifies other users of presence information indicating a state of the user such as "available" and "in meeting". In this regard, the user conducts a predetermined button operation on a mobile communication terminal to update the contents of presence information to be notified to other users.

Another example of the conventional techniques is described in Japanese Laid-Open Patent Publication No. 2004-23374. According to the technique described in this patent publication, the update of presence information such as "in operation", "on phone", "busy", and "waiting" is triggered by operation of a portable terminal such as folding or unfolding of the foldable terminal, opening or closing of a flip cover, pulling out of an antenna, or a button operation.

### DISCLOSURE OF THE INVENTION

### Problems To Be Solved by The Invention

All these conventional techniques require a user to intentionally perform a series of operations for explicitly indicating whereabouts of the user. Using Instant Messenger or PoC, for example, the user is required to update the presence information by conducting predetermined operations using an input device, but these operations are often not easy especially for those users who are inexperienced in computer operation.

Moreover, it is not necessarily clear to the user himself/herself what demerits will be caused when presence information is not generated, or what merits will be brought when it is generated. Therefore, it often happens that the user neglects to conduct the operation, forgets the operation method, or avoids the operation simply because it is troublesome.

As for the technique described in Japanese Laid-Open Patent Publication 2004-23374, the problem mentioned above is not so serious because the generation of presence information is triggered by an operation easy to perform for anybody, such as folding of a mobile communication terminal or pulling out of an antenna. However, the problem is not solved yet since operation must still be performed only for updating the presence information, and this operation may be neglected by the user.

Moreover, according to these conventional techniques, no consideration is given to the current position of the user generating the presence information.

Accordingly, even if presence information of a specific user can be obtained, it is impossible to know where the user is unless the information is given by the user himself/herself. In the case of using Instant Messenger, for example, it is possible to know that the user is in front of a computer capable of executing Instant Messenger, but it is not known whether the user is using the computer at home or using the computer in the office, or whether the user is using the computer at his/her desk or his/her colleague's desk.

Similarly, since no positional information is referred to, it is impossible to simultaneously call or send a message to all of a number of people present at a specific location, especially when mobile communication terminals are used as user terminals. More specifically, it is not possible to simultaneously call or to simultaneously distribute a message to users who have a cellular phone and are currently present on a specific floor or in a specific room.

A technique is conventionally known in which a plurality of users is preset as one group, and presence information is notified to all the users belonging to the group by sending a message addressed to the group. However, according to this technique, no consideration is given to current positions of the users or user terminals. Therefore, even if calling is addressed to a group of people using a certain room in order to call all the people present in the room, it will not be possible to call the user terminals of those people who are present in the room but do not belong to the relevant group. Although those people who belong to the group but currently are not in the room need not be called, the calling is addressed to such people as well.

Further, in the presence information, state information relating to the state of a user is required to be intentionally updated by the user's operation, and cannot be previously set by other users or a system administrator. Therefore, the user is required to explicitly update the presence information even if it is obvious what the using is doing based on his/her location, such as when the user is in a meeting room or a laboratory.

In view of the circumstances described above, the problems to be solved by the present invention are as follows.

A first problem is to provide a technique to generate presence information substantially without requiring any intentional operational by a user. This makes it possible to prevent the user from forgetting the setting method or operating method, and from neglecting or failing to perform the operation.

A second problem is to provide a technique enabling to notify other terminals of presence information, by employing a currently available cellular phone terminal or the like without providing the same with any additional function for notifying other terminals of the presence information.

A third problem is to provide a technique in which presence information including adequate state information according to a location of the user is notified to other terminals.

### Means for Solving The Problems

In order to achieve the objects above, the present invention provides the following techniques.

The present invention provides a presence information notification system for notifying a terminal of presence information indicating whether or not a user is present at a predetermined position. The presence information notification system includes: a portable device carried by the user; an installed device installed at a predetermined position and having a memory device A storing an identifier A for identifying the individual installed device, detection means for detecting the portable device, and means for performing data communication via a data communication network; and a server having a first memory device storing first association relationship between positional information indicating the position where the installed device is installed and the identifier A of the installed device installed at the position indicated by the positional information, and means for performing data communication via a data communication network. In the system of the present invention, the installed device transmits, in response to detection of the portable device, the identifier A of the installed device to the server via the data communication network. The server acquires positional information associated with the received identifier A by referring to the first association relationship and notifies the portable terminal of the positional information. According to this configuration, it is made possible to check whether or not the user of the portable device is present in the vicinity of installed device having detected the portable device, without requiring the user to perform any special operation. The detection of the portable device may be performed, if the installed device is a charging device for the portable device, for example, by sensing the contact between charging contact terminals of the portable device and the installed device. Alternatively, the detection may be carried out by wireless communication between the installed device and the portable device.

In the system according to the present invention, the portable device may have a memory device B storing an identifier B for identifying the individual portable device, and means for outputting the identifier B to another device than the portable device, while the installed device may further have means for receiving the identifier B output by the portable device in response to detection of the portable device by the detection means. The installed device transmits both the identifiers A and B to the server, and the server notifies the terminal of the identifier B together with the positional information associated with the received identifier A. According to this configuration, it is made possible not only to notify the terminal that somebody is present in the vicinity of the installed device, but also to notify the terminal of the identifier B of the portable device carried by that person. Although the identifier B is transmitted from the portable device to the installed device by the means for outputting the identifier B of the portable device and the means for receiving the identifier B of the installed device, the identifier B may be transmitted as an electrical signal by forming these means in contact with each other to form a circuit, or by applying one of various wireless communication technologies. The wireless communication technologies applicable herein include, for example, Bluetooth, HomeRF (Home Radio Frequency), IrDA (Infrared Data Association), RF-ID, and wireless LAN specified in IEEE 802.11. Further, also applicable are wireless communication technologies such as UWB (Ultra Wide Band), PHS (Personal Handyphone System), PDC (Personal Digital Cellular), GSM (Global System for Mobile Communications), CDMA (Code Division Multiple Access), W-CDMA (Wideband CDMA), CDMA 2000, and OFDM (Orthogonal Frequency Division Multiplexing).

The present invention also provides a presence information notification system for notifying a terminal of presence information indicating whether or not a user is present at a predetermined position, wherein the system includes an installed device installed at a predetermined position and having a memory device A storing an identifier A for identifying the individual installed device, and means for outputting the identifier A to another device than the installed device; a portable device carried by a user and having means for receiving the identifier A output from the installed device, means for performing data communication via a data communication network, and detection means for detecting the installed device; and a server having a first memory device storing first association relationship between positional information indicating a position where the installed device is installed and the identifier A of the installed device installed at the position indicated by the positional information, and means for performing data communication via a data communication network. In response to detection of the installed device, the portable device receives the identifier A from the installed device and transmits the same to the server via the data communication network. The server acquires positional information associated with the received identifier A by referring to the first association relationship and notifies the terminal of the acquired positional information. According to this configuration as well, it is made possible to check whether or not the user of the portable device is present in the vicinity of installed device having detected the portable device, without requiring the user to perform any special operation. Although the identifier A is transmitted from the portable device to the installed device by the means for outputting the identifier A of the portable device and the means for receiving the identifier A of the installed device, the identifier A may be transmitted as an electrical signal by forming these means in contact with each other to form a circuit, or by applying a wireless communication technology, such as Bluetooth or HomeRF.

In the system according to the present invention, the portable device may further have a memory device B storing an identifier B for identifying the individual portable device to transmit both the identifiers A and B to the server, and the server may be designed to notify the terminal of the identifier B together with the positional information associated with the received identifier A. According to this configuration, it is made possible not only to notify the terminal that somebody is present in the vicinity of the installed device, but also to notify the terminal of the identifier B of the portable device carried by that person.

When the identifier B is used, the server may include a second memory device storing second association relationship between the identifier B and user information preliminarily associated with the identifier B, and the server may be designed to acquire the user information associated with the identifier B received from the installed device by referring to the second memory device, and to notify the terminal of the acquired user information and the positional information associated with the identifier A received from the installed device. According to this configuration, it is made possible to notify the terminal of the user information preliminarily registered in the second memory device such as the name, department and the like of the user of the portable device, together with or instead of the identifier B of the portable device.

The server may include a third memory device storing association relationship between the identifier A and state information indicating a state of the user in the vicinity of the installed device associated with the identifier A. In this case, the server acquires the state information associated with the identifier A received from the installed device by referring to the third memory device, and notifies the terminal of the acquired state information and the positional information associated with the identifier A received from the installed device. According to this configuration, when state information of the user present in the vicinity of the installed device is necessarily determined based on the characteristic of the installation position of the installed device or the like, predetermined state information can be automatically transmitted without requiring the user to operate the portable device. For example, when the user is in a meeting room or a laboratory, it is naturally considered that the user is in the state of attending a meeting or conducting an experiment. This means that, this configuration makes it possible to set default state information for each location.

The portable device may further include a secondary battery, and power receiving means for receiving supply of power for charging the secondary battery from another device, and the installed device may further include power transmitting means for supplying power to the power receiving means. In other words, the installed device is desirably a charging device for the portable device. There are various types of portable devices driven by an electrical storage device, and a user of such portable device is expected to have already acquired the habit of charging the portable device by means of a charging device. Therefore, the presence information will be notified to the terminal without any particular attention by the user. The electrical storage device as used herein may be a secondary battery which stores energy by converting electrical energy to chemical energy, or a device involving no chemical reaction such as a capacitor device. The power receiving means and the power transmitting means may be respectively provided with metallic terminals which conduct electricity by being in contact with each other. Alternatively, non-contact charging (inductive charging) may be utilized so that charging is effected externally in non-contact manner.

The installed device desirably further includes a stand to place a portable device thereon. In this case, the detection means detects that the portable device is placed at a predetermined position on the stand, and the power receiving means and the power transmitting means charge the secondary battery in response to the detection by the detection means. According to this configuration, it is made possible to perform both charging and notification of the presence information simply by placing the portable device on the stand.

A representative example of the portable device used in this system is a mobile communication terminal. It should be understood that any other device may be used as the portable device for the system as long as it is portable and has an identifier that can be output externally. For example, a PDA, a notebook computer, a wrist watch, an IC card or the like may be used as the portable device.

The present invention also provides a presence information notification method having same characteristics as the system described above, a computer program causing a computer to execute processing as the server in the system described above, a charging system composed of a portable device and a charging device for the same, a charging device, and a portable device.

An IP address for example may be used as the identifier A of the installed device. When the portable device is a wireless telephone terminal such as a cellular phone terminal or a PHS (personal handyphone system) terminal, the telephone number of the terminal may be used as the identifier B.

Further, the present invention provides a presence information notification system for notifying a terminal of presence information indicating whether or not a user is present at a predetermined position, including: an installed device having a first wireless data communication means for performing wireless data communication, data communication means for performing data communication via a data communication network, and a memory device A storing an identifier A for identifying the individual installed device; a trigger device arranged at a predetermined position in association with the installed device; a portable device having detection means for detecting the trigger device, and second wireless data communication means for performing wireless data communication with the first wireless data communication; and a server having a first memory device storing first association relationship between positional information indicating the position where the trigger device is installed and the identifier A of the installed device associated with the trigger device installed at the position indicated by the positional information, and means for performing data communication via a data communication network. In this system, the portable device transmits detection of the trigger device to the installed device by means of wireless data communication, the installed device notified of the detection of the trigger device transmits the identifier A of the installed device to the server via the data communication network, and the server acquires positional information associated with the identifier A by referring to the first association relationship and notifies the terminal thereof.

Further, the present invention provides a presence information notification method of notifying a terminal of presence information indicating whether or not a user is present at a predetermined position. The method uses a portable device carried by the user, an installed device, a trigger device installed at a predetermined position in association with the installed device, a server connected to the installed device via a data communication network, and a terminal connected to the server via a data communication network to receive the presence information from the server. The method includes: a step 1 in which association relationship between positional information indicating the position of the trigger device and an identifier A prestored in a memory device of the installed device for identifying the individual installed device is registered in the server; a step 2 in which the portable device detects the trigger device; a step 3 in which detection of the trigger device is notified by the portable device to the installed device; a step 4 in which the installed device transmits the identifier A to the server in response to notification of the detection of the trigger device; a step 5 in which the server acquires positional information associated with the identifier A received from the installed device according to the registered association relationship; and a step 6 in which the acquired positional information is transmitted by the server to the terminal.

Further, the present invention provides a computer program causing a computer to execute processing of notifying a terminal of presence information indicating whether or not a user is present at a predetermined position, via a data communication network, the program being designed to cause a computer connected to an installed device via a data communication network to execute processing in which the installed device, a trigger device installed at a predetermined position in association with the installed device, a portable device carried by the user and notifying the installed device of detection of the trigger device, and the terminal connected to the server via the data communication network and receiving the presence information from the server are linked with one another. The program is characterized by causing the computer to execute: processing of registering in the server association relationship between positional information indicating the position of the trigger device and an identifier A prestored in a memory device of the installed device for identifying the individual installed device; processing of receiving the identifier A transmitted by the installed device in response to notification of the detection of the trigger device from the portable device; processing of acquiring positional information associated with the identifier A received from the installed device according to the registered association relationship; and processing of transmitting the acquired positional information to the terminal via the data communication network.

### Effects of The Invention

According to the present invention, it is possible to check whether the user of the portable device is present or not in the vicinity of the installed device having detected the portable device.

In general, the cellular phone terminal is charged by being placed on a stand of a charging device, and the cellular phone terminal is provided with a charging contact terminal and a data input/output terminal at an end thereof. Therefore, the stand is also provided with a data input/output terminal corresponding to that of the cellular phone terminal, together with a charging contact terminal. Thus, the charging device used herein is designed such that, hen the contact terminals of the cellular phone terminal and the stand come into contact with other, the data input/output terminals are also brought into contact with each other. This configuration makes it possible to use a conventionally used cellular phone terminal directly as the portable device of the present invention.

The identifier B of the installed device can be linked with state information at the installation place to set an initial value of the state information at the installation place. Therefore, such state information that is frequently generated at the installation place can be notified without requiring the user to perform any particular operation at the instillation place.

### BRIEF DESCRIPTION OF THE DRAWINGS

Fig. 1 is a functional block diagram illustrating a presence information notification system 100 according to an aspect of the present invention;
Fig. 2 is a flowchart for explaining operation of the presence information notification system 100;
Fig. 3 is a functional block diagram illustrating a presence information notification system 300 according to an aspect of the present invention;
Fig. 4 is a flowchart for explaining operation of the presence information notification system 300;
Fig. 5 is a functional block diagram illustrating a presence information notification system 500 according to an embodiment of the present invention;
Fig. 6 shows an example of a presence information notification screen;
Fig. 7 is a functional block diagram illustrating a charging system composed of a mobile terminal 510 and a charging device 520;
Fig. 8 is a functional block diagram illustrating a server 530;
Fig. 9 is a flowchart for explaining operation of the presence information notification system 500;
Fig. 10 is a flowchart for explaining operation of the presence information notification system 500;
Fig. 11 is a functional block diagram illustrating a charging system composed of a mobile terminal 1110 and a charging device 1120;
Fig. 12 is a functional block diagram illustrating a charging system composed of a mobile terminal 510, a charging device 1210, and a personal computer 1220;
Fig. 13 is a functional block diagram illustrating a charging system composed of a mobile terminal 1310 and a charging device 1320;
Fig. 14 is a functional block diagram illustrating a presence information notification system 1400 according to an embodiment of the present invention;
Fig. 15 is a functional block diagram illustrating a charging system composed of a mobile terminal 1510 and a charging device 1520;
Fig. 16 is a functional block diagram illustrating a presence information notification system 1600 according to an embodiment of the present invention; and
Fig. 17 is a functional block diagram illustrating a charging system composed of a mobile terminal 1710, a charging device 1720, and a wireless base station 1730.

### BEST MODE FOR CARRYING OUT THE INVENTION

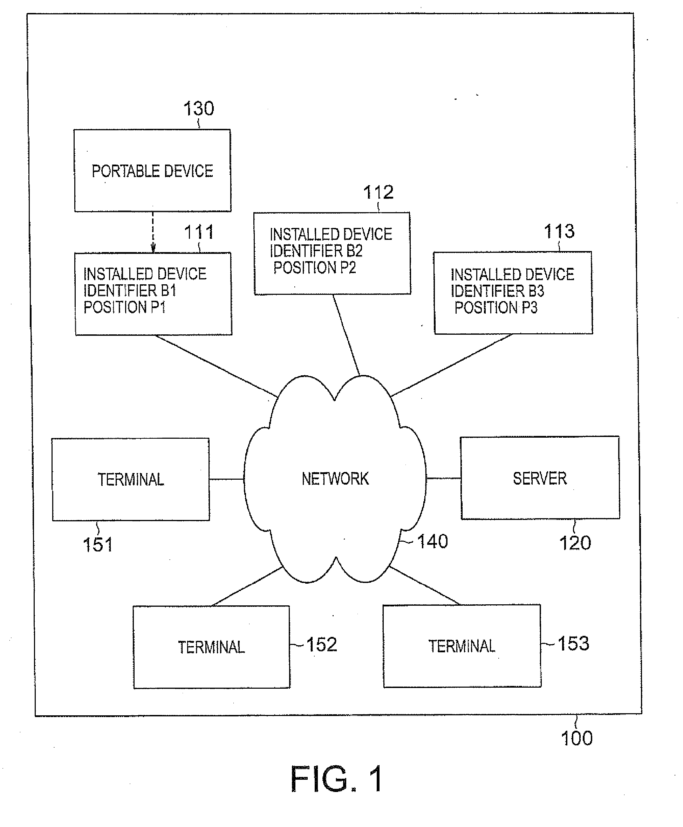

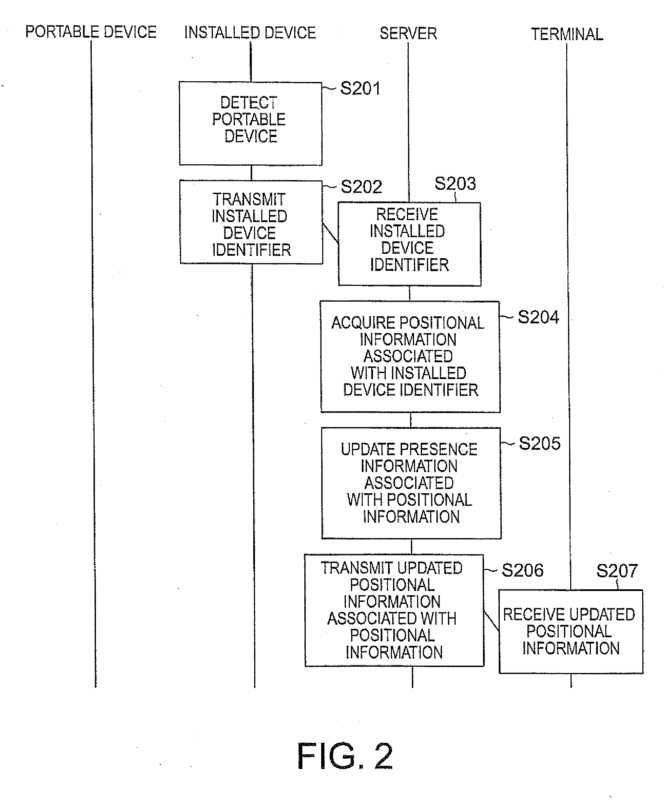

A presence information notification system 100 according to an aspect of the present invention will be described with reference to Figs. 1 and 2.

Installed devices 111,112, and 113 assigned with unique installed device identifiers B1, B2, and B3 are installed at a plurality of mutually different positions P1, P2, and P3, respectively. A table T1 representing association relationship between the installed device identifiers B1, B2, B3 and the positional information P1, P2, P3 is preliminarily stored in a memory device which can be referred to by a server 120.

When it is assumed that a user carrying a portable device 130 has approached to the installed device 111, the installed device 111 detects the approach or connection of the portable device 130 (step S201). In response to the detection, the installed device 111 transmits the installed device identifier B1 to the server 120 via a data communication network 140 (step S202).

Upon receiving the installed device identifier B1 (step S203), the server 120 refers to the table T1 to acquire installation position P1 associated with the installed device identifier B1 (step S204), and updates presence information at the installation position P1 (step S205). The updated presence information may be notified to predetermined terminals 151, 152 and 153 by means of an electronic mail, for example. Alternatively, a table T2 representing association relationship between positional information and presence information may be created and published by means of a web server or the like so that the updated presence information is notified upon request from the terminals 151, 152, and 153 (steps S206 and S207).

When the user carrying the portable device 130 has moved away from the installed device 111, the absence of the user at the installation position P1 is notified in a similar manner. If the portable device 130 again approaches or is connected to another installed device 112 or 113, the presence of the user at the corresponding installation position is notified.

In the presence information notification system 100 as described above, the installed device 111 performs detection of the portable device 130 and transmission of the installed device identifier B1. In a presence information notification system 300 according to another aspect of the present invention, on the contrary, the portable device 130 detects the installed device 111 and transmits the installed device identifier B1 to the server 120.

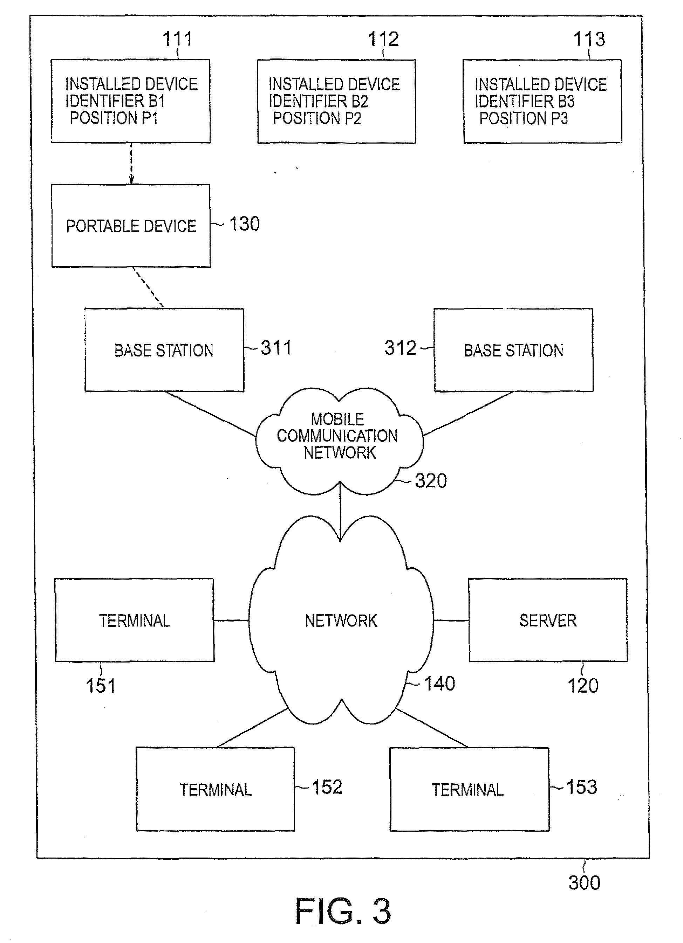

Fig. 3 shows a presence information notification system 300. Elements and components corresponding to those in the presence information notification system 100 described above are assigned the same reference numerals. In the system 100 above, the installed device identifiers are transmitted from the installed devices 111, 112 and 113 to the server 120. This system 300 is different from the system 100 in that the installed device identifiers transmitted from the portable device 130 to the server 120. Accordingly, in the system 300, a mobile communication system including base stations 311 and 312 and a mobile communication network 320 are shown.

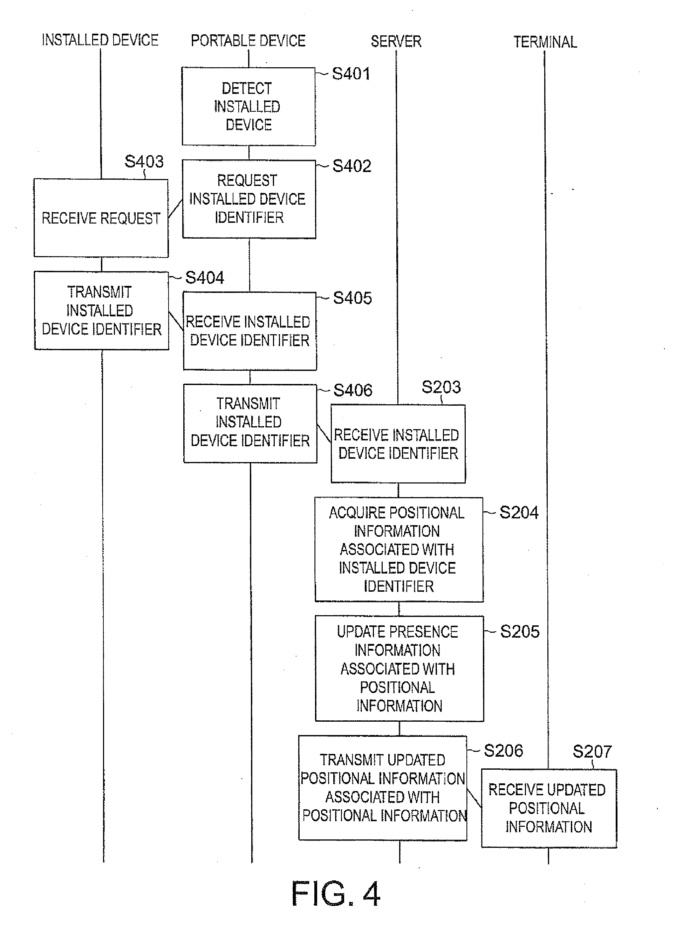

Operation of the presence information notification system 300 will be described with reference to Fig. 4. When the portable device 130 detects its approach or connection to the installed device 111 (step S401), the portable device 130 requests the installed device 111 to output an installed device identifier B1 (step S402). In response to this request, the installed device 111 outputs the installed device identifier B1 to the portable device 130 (step S404). Upon receiving the installed device identifier B1 (step S405), the portable device 130 transmits the installed device identifier B1 to the server 120 via the nearest base station 311, the mobile communication network 320, and the network 140 (step S406). The following operation is the same as that of the system 100 above, and the description thereof is omitted.

According to these presence information notification systems 100 and 300, an installed device identifier is notified to the server 120 based on detection by the portable device 130 of its approach or connection to any of the installed devices 111 to 113. The server 120 acquires, from the table T1, positional information corresponding to the notified installed device identifier, and notifies the terminal of the acquired information. In this manner, it is made possible to update the presence information and notify the terminal whether the user is present or not at the installation position of the relevant installed device, without requiring the user of the portable device to perform any particular operation.

A table T3 representing association relationship between portable device identifiers assigned to respective portable devices 130 and user information of the users of the portable devices 130 may be preliminarily stored in a memory device of the server 120, so that the portable device identifier is transmitted together when an installed device identifier is transmitted to the server 120 to allow the server 120 to acquire the associated user information. In this manner, the user information can be transmitted to terminals 151, 152 and 153 together with the positional information as the presence information. This means that it is possible to notify who is present instead of only notifying the presence of someone.

It is also possible to omit the operation by the user for updating the state information by preliminarily registering an initial value of the state information in the table T2. This is especially effective for example when the state of a user can be specified at the relevant installation position such as in a meeting room or a laboratory.

Since the installed devices 111 to 113 are assigned the respective identifiers independently from the portable devices 130, it is possible to call or distribute a message to all the persons present at the installation position regardless of whho is at the installation position. Further, a plurality of installed devices installed in a same room for example can be grouped into a group, so that simultaneous calling or simultaneous message distribution can be performed, addressed to the users present in the vicinity of the installed devices belonging to the group. When there is a user who has moved from a department A to another department B, it is conventionally necessary to change the system setting relating to the user's department in order that the user receives the simultaneous calling to the department B. However, according to the present invention, the user is only required to carry his/her own portable device when moving to the department B.

The portable device 130 may be an information processing device that the user constantly carries for use, such as a cellular phone terminal, a PHS terminal, a PDA (personal data assistant), and a wrist watch.

An appropriate example of the installed devices 111 to 113 will be a charging device for the portable device 130. The charging may be conducted in contact fashion by bringing terminals provided on the portable device and the charging device in contact with each other, or in non-contact fashion, or so-called inductive charging method, by noncontactly charging from an external source. When the contact charging method is used, an installed device identifier or a portable device identifier may be transmitted between the portable device 130 and the installed devices 111 to 113 via the contact terminals. Alternatively, a data input/output terminal may be provided separately from the contact terminals for charging. Still alternatively, the transmission of the identifier may be conducted by using a wireless communication technology, such as Bluetooth or HomeRF (home radio frequency).

For the convenience of description, the portable device 130 and the terminals 151 to 153 have been referred to with different terms, the portable device and the terminals may be a same type of devices. This means that one and the same cellular phone terminal may sometimes function as the portable device 130 and sometimes function as one of the terminals 151 to 153.

### Embodiment 1

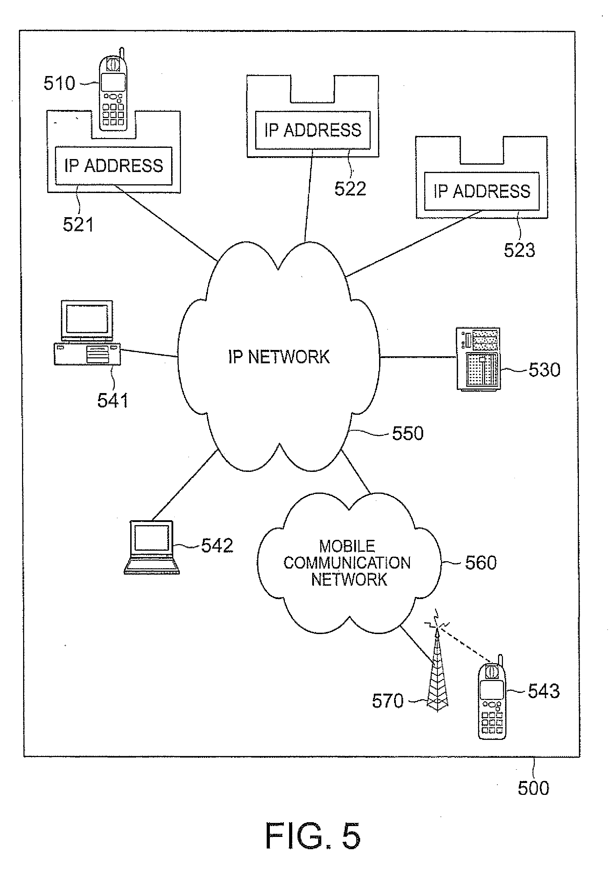

A presence information notification system 500 as an embodiment 1 will be described with reference to Fig. 5. The presence information notification system 500 includes a mobile terminal 510, charging devices 521, 522, 523,..., a server 530, terminals 541, 542, 543,..., an IP network 550, a mobile communication network 560, and a base station 570.

The mobile terminal 510 is a portable communication terminal carried by an individual user. The mobile terminal 510 has telephone communication and information processing functions, and operates on a built-in secondary battery. The mobile terminal 510 also includes a memory device for storing the telephone number of the mobile terminal itself, and a data input/output interface for reading the telephone number from the memory device and outputting the same externally. The mobile terminal 510 operates on a built-in secondary battery.

The charging devices 521, 522, 523,...(hereafter, generally referred to as the "charging device(s) 520") each have a function to supply power to the mobile terminal 510 for charging the secondary battery incorporated in the mobile terminal 510. The charging device 520 also has a function to perform data communication via the IP network 550. The charging device 520 further has a data input/output interface for requesting the mobile terminal 510 to output a telephone number and receiving the telephone number. The charging device 520 not only supplies power to the mobile terminal 510 but also acquires information such as the telephone number from the mobile terminal 510 to transmit the same to a presence server on the IP network.

The server 530 is a server apparatus connected to the IP network 550, which generates or updates presence information by processing information received from the mobile terminal 510 or the charging device 520. The server 530 also provides presence information to the terminals 541, 542, 543,...(hereafter, generally referred to as the "terminal(s) 540") via the IP network 550 or the mobile communication network 560.

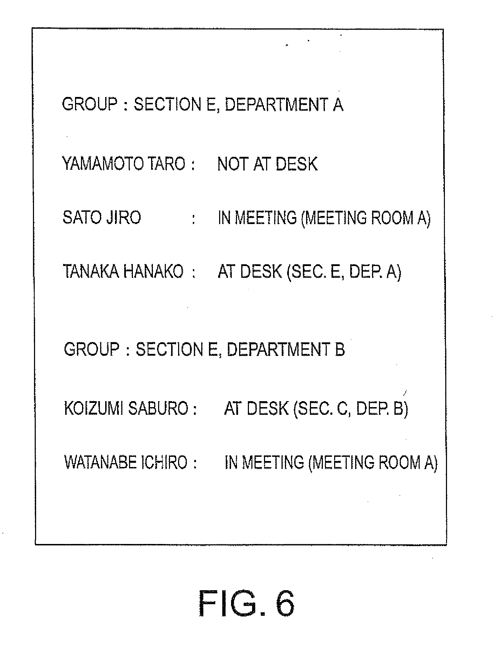

The terminal 540 is an information processing device such as a personal computer, a work station, a PDA, and a portable communication terminal, which performs data communication via the IP network 550. One and the same device may function as the mobile terminal 510 when generating the user's presence information, and functions as the terminal 540 when displaying another user's presence information. The terminal 540 displays an information display screen as shown in Fig. 6 on its display device.

The IP network 550 is a network connected via IP (Internet Protocol), and mutually connects the mobile terminal 510, the charging device 520, the server 530, and the terminals 540. The terminal 543 is further connected to the IP network 550 via the mobile communication network 560, and the base station 570. The devices on the IP network 550 are preliminarily assigned with unique IP addresses, respectively, so that data communication among the devices is performed based on these IP addresses.

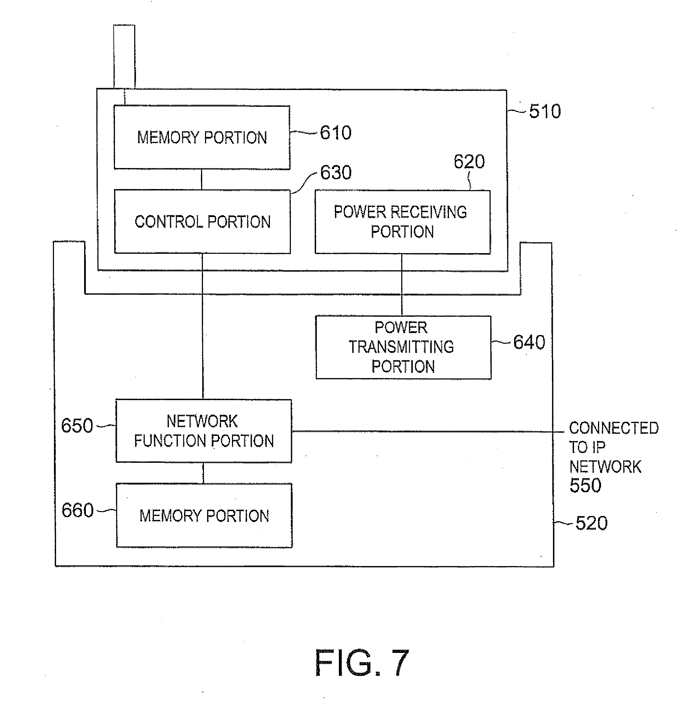

A further description will be made of the mobile terminal 510 and the charging device 520 with reference to Fig. 7. The mobile terminal 510 includes a memory portion 610 for storing its own telephone number, a power receiving portion 620 for receiving power from an external source for charging the built-in secondary battery, and a control portion 630 for transmitting the telephone number stored in the memory portion 610 to the charging device 520 in response to conduction of the power receiving portion 620. On the other hand, the charging device 520 includes a power transmitting portion 640 for supplying power to the power receiving portion 620, a network function portion 650 for performing data communication via the IP network 550, and a memory portion 660 for storing an IP address assigned to the charging device 520.

The charging device 520 has a stand (not shown), so that power is supplied from the power transmitting portion 640 to the power receiving portion 620 when the mobile terminal 510 is placed at a predetermined position on the stand. For example, a contact terminal that comes into contact with each other when the mobile terminal 510 is placed at a predetermined position on the stand is provided at the end of the mobile terminal 510 which comes into contact with the stand when the mobile terminal 510 is placed on the stand, while another contact terminal is provided at a position on the stand corresponding to the predetermined position, so that power is supplied via the contact terminals.

Further, a contact terminal like the contact terminals described above that comes into contact with each other when the mobile terminal 510 is placed at a predetermined position on the stand is provided on both the mobile terminal 510 and the charging device 520. The telephone number stored in the memory portion 610 is notified to the charging device 520 via these terminals.

When the mobile terminal 510 is placed at a predetermined position on the stand of the charging device 520, the power receiving portion 620 and the power transmitting portion 640 are electrically connected to each other. Upon detecting the connection of the power receiving portion 620, the power transmitting portion 640 starts supplying power to the power receiving portion 620. Upon detecting the conduction of the power receiving portion 620, the control portion 630 reads the telephone number from the memory portion 610, and notifies the network function portion 650 thereof. The detection conducted here is not to detect whether or not the battery has been charged fully, but is to detect whether or not the charge function portions are connected mutually. The memory portion 660 stores installed device identifiers such as IP addresses for identifying the devices on the network. The network function portion 650 performs data communication with the server 530 via the IP network by using these installed device identifiers, to thereby notify the server 530 of the telephone number stored in the memory portion 610 and the installed device identifier stored in the memory portion 660.

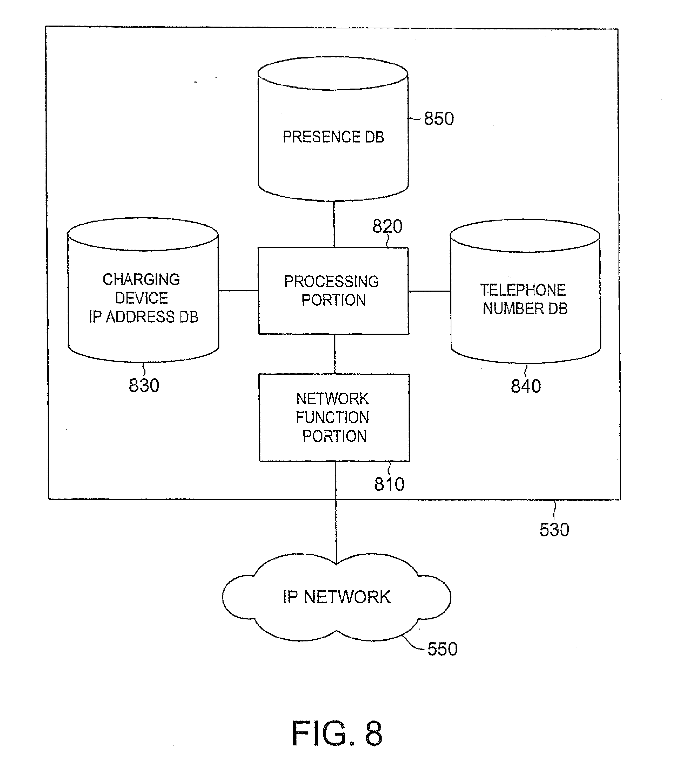

A further description will be made of the server 530 with reference to Fig. 8. The server 530 includes a network function portion 3f 0 connected to the IP network, a processing portion 820 performing data processing according to a computer program, and three databases (hereafter, abbreviated as the "DB"), namely a charging device IP address DB 830, a telephone number DB 840, and a presence DB 850.

The charging device IP address DB 830 manages a table such as Table 1 below, storing data relating to the charging devices 521, 522, 523, ... connected to the IP network 550 to which the server 530 is connected. The example of Table 1 stores IP addresses assigned to the charging devices, default settings, seat names, and group names. The default settings are shown in a column in which initial values for the state information indicating the user's state are set. This means that, unless the state information at a position where the charging device is installed is updated by the user's operation or the like to explicitly change the setting, the default setting of the state information is notified as part of the presence information. The seat names are serial numbers assigned to respective seats in a department or a room where the charging devices are installed. The group names indicate titles of the groups which the charging devices 520 belong to. The charging devices 520 are grouped depending on the rooms or departments where the charging devices are installed. The charging devices in Table 1 each belong to any of three groups: Division E of Department A, Division C of Department B, and the meeting room A. Combination of a seat name and a group name indicates positional information of the position where the relevant charging device 520 is installed.

**Table 1**

| Charger IP Address | Default Setting | Seat Name | Group Name |
|---|---|---|---|
| 10.0.5.1 | At desk | Seat 1 | Division E, Department A |
| 10.0.5.2 | Transfer (123-9876) | Seat 2 | Division E, Department A |
| 10.0.5.3 | At desk | Seat 3 | Division E, |
| ... | ... | ... | ... |
| ... | ... | ... | Department B |
| 10.1.3.40 | At desk | Seat 40 | Division C, |
| 10.200.1.1 | In meeting | Seat 1 | Meeting room A |
| 10.200.1.2 | In meeting | Seat 2 | Meeting room A |
| ... | ... | ... | ... |
| ... | ... | ... | ... |
| 10.200.1.30 | In meeting | Seat 30 | Meeting room A |

The telephone number DB 840 is a database managing a table such as Table 2 below, in which only the telephone numbers of the mobile terminals 530 and user information of the users of the mobile terminals 530 are registered. In the example of Table 2, only the users' names are registered as the user information.

**Table 2**

| EXT Number | Name |
|---|---|
| 105-0001 | YAMADA Taro |
| 105-0002 | SATO Jiro |
| 105-0003 | TANAKA Hanako |
| ... | ... |
| ... | ... |
| 203-0040 | WATANABE Ichiro |

The presence DB 850 is a database managing a table such as Table 3. This table is created by the processing portion 820 based on the identifiers transmitted from the charging devices 520 and the tables stored in the charging device IP address DB 830 and the telephone number DB 840. For example, the row containing the EXT number of 105-0001 indicates that the mobile terminal 530 having this telephone number is not placed on a specific charging device 520 and the user is not at his/her desk. The row containing the EXT number 105-0002 indicates that the mobile terminal 530 having this telephone number is placed at the Seat 2 in the meeting room A, namely on the charging device having the IP address 10.200.1.1 as shown in the table of the charging device IP address DB 830. The state information is indicated as "in meeting" according to the corresponding default setting.

**Table 3**

| EXT Number | Location | State |
|---|---|---|
| 105-0001 | - | Not at desk |
| 105-0002 | Seat 2, Meeting room A | In meeting |
| 105-0003 | Seat 3, Division E, Department A | At desk |
| ... | ... | ... |
| ... | ... | ... |
| 203-0040 | Seat 2, Meeting room A | In meeting |

Upon receiving the identifiers of the memory portions 610 and 650, the processing portion 820 generates information in which the users' user information is associated with positional information as shown in Fig. 6, by referring to Tables 1, 2 and 3.

Operation of the presence information notification system 500 as described above will be described. Prior to the notifying operation of the presence information, the mobile terminal 510 or the terminal 540 is first used to access the server 530 via the IP network 550 and register the user information (user names) and the portable device identifiers (telephone numbers) in the telephone number DB 840. A user or network manager who wants to use the presence positional information registers, in the charging device IP address DB 830, the IP addresses of the charging devices 520 linked with positional information such as the names of locations where the charging devices 520 are installed, and at the same time the charging devices 520 are classified into groups. Further, if necessary, initial values of the state information when the mobile terminals 510 are placed on the charging devices 520 are set as default settings.

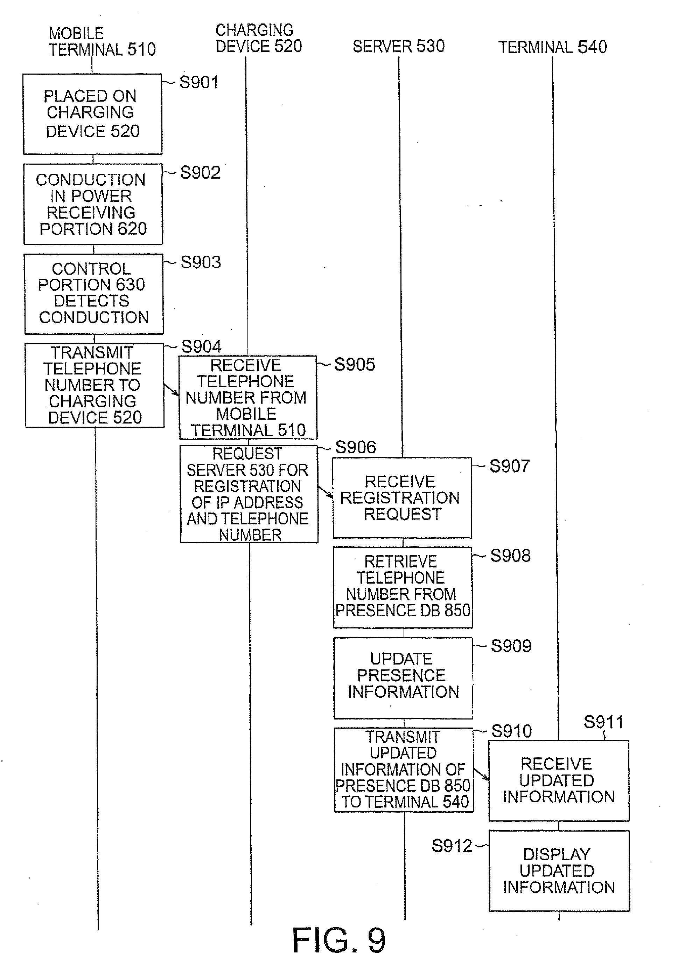

The following description will be made with reference to Fig. 9. When the user places the mobile terminal 510 on the charging device 520 (step S901), the power transmitting portion 640 supplies power to the power receiving portion 620, and the power receiving portion 620 starts charging the secondary battery by using the supplied power (step S902). The control portion 630 constantly monitors the power receiving portion 620 to detect whether or not the power transmitting portion 640 and the power receiving portion 620 are electrically connected. Upon detecting the connection (S903), the control portion 630 reads the telephone number from the memory portion 610, and transmits the same to the network function portion 650 via the data input/output interface (steps S904 and S905). Acquiring the telephone number from the mobile terminal 510, the charging device 520 transmits, to the server 530, the telephone number thus acquired and the IP address of the charging device 520 stored in the memory portion 660, via the IP network 550, and requests registration of the updated presence information (step S906).

Upon receiving the IP address of the charging device, the telephone number of the mobile terminal 510, and the request for registration of the changed presence information from the charging device 520 (step S907), the server 530 accesses the presence DB 850 to search for the received telephone number (step S908).

The IP address of the charging device 520 on which the mobile terminal is placed is added in the presence information of the telephone number thus found by the search, whereby the presence information "at desk" is generated in the table of Table 1, in association with the seat designated by the IP address (step S909). State information contained in the presence information thus generated is in accordance with the default settings which the manager of the charging device 520 has preliminarily made in the table of Table 1. For example, when the presence information associated with the meeting room is default set to "in meeting", the presence information for the mobile terminal placed on the charging device in the meeting room automatically becomes "in meeting" without any setting by the user. The default settings may be set variable according to hours of a day. For example, a charging device may be installed at home, and the default settings may be set such that the presence information is "sleeping" when the mobile terminal is placed on the charging device during hours from late night to early morning, and is "available" during the other hours.

The server 530 transmits the updated presence information to the terminals 540 (step S910). The terminals 540 may be wireless communication terminals like the mobile terminals 510. This enables the registered terminals to be informed at real time of the updated presence information (steps S911 and S912). In step S910, the updated presence information is transmitted to predetermined terminals 540 by being triggered by the update of the presence information. However, instead of this, or in conjunction with this, the update may be announced on the web server so that the latest presence information is transmitted in response to a viewing request from a terminal 540.

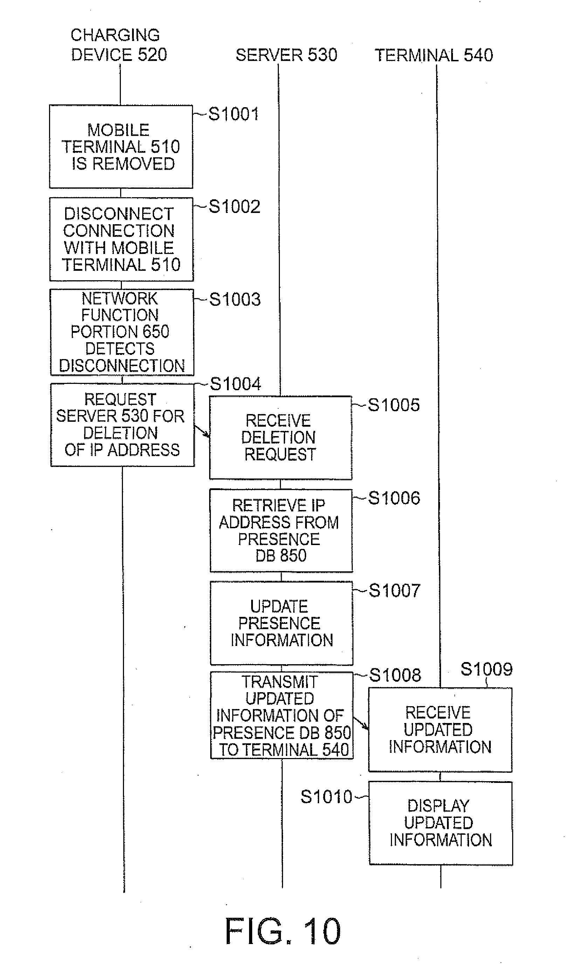

Referring to Fig. 10, a description will be made of operation of the presence information notification system 500 when the state information is updated from "at desk" to "not at desk".

The presence information is updated to "not at desk" by being triggered by the removal of the mobile terminal from the charging device, according to the method shown in the flowchart of Fig. 10.

When the mobile terminal 510 is removed from the charging device 520 (step S1001), the power receiving portion 620 is electrically disconnected from the power transmitting portion 640 (step S1002) and, at the same time, the control portion 630 is disconnected from the network function portion 650. Upon detecting the disconnection from the control portion 630 (step S1003), the network function portion 650 accesses the server 530 by using the IP address stored in the memory portion 660, and transmits a request for changing the presence information (step S1004). Upon receiving the request for change (step S1005), the server 530 accesses the presence DB to search for the requesting user by using the IP address as a key (step S1005). The server 530 then deletes the charging device IP address of the relevant user from the presence information in the table of Table 3 (step S1006). Thus, the presence information having state information "not at desk" for example is generated.

In general, however, the mobile terminal 510 is removed from the charging device 520 when used for telephone call. Therefore, during telephone call, the conventional presence function of the mobile communication system can be utilized to display the presence status as "on phone". Alternatively, a timer may be set to measure the elapsed time from the removal, so that the presence status is displayed in a different manner such as "temporarily busy" while the elapsed time is within a certain period of time, and displayed as "not at desk" when the elapsed time exceeds the certain period of time.

The following steps S1008 to S1010 are the same as the steps S914 to S912 described above.

### Embodiment 2

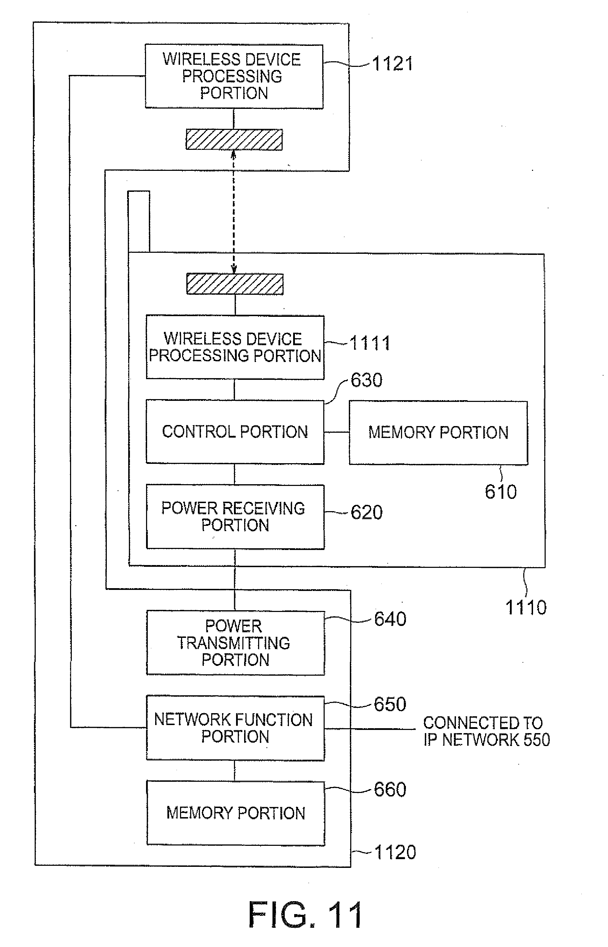

An embodiment 2 will be described with reference to Fig. 11. While the embodiment 1 employs the mobile terminal 510 and the charging device 520 shown in Fig. 7, the embodiment 2 instead employs a mobile terminal 1110 and a charging device 1120.

According to the embodiment 1, the telephone number stored in the memory portion 610 is transmitted to the charging device 520 by means of the power supplying contact terminals between the power receiving portion 620 and the power transmitting portion 640, or by means of the data input/output contact terminals provided separately from the power supply terminals. These contact terminals are arranged at a portion where the mobile terminal 510 comes into contact when placed on the charging device 520.

According to the embodiment 2, in contrast, only power supplying contact terminals are provided at the portion where the mobile terminal 1110 and the charging device 1120 come into contact with each other. No data input/output terminal is provided for transmitting the telephone number, but instead wireless device processing portions 1111 and 1121 are provided in the mobile terminal 1110 and the charging device 1120, respectively. The wireless device processing portions 1111 and 1121 perform wireless data communication with each other by means of a wireless communication technology such as Bluetooth, HomeRF (Home Radio Frequency), IrDA (Infrared Data Association), RF-ID, wireless LAN specified in IEEE802.11, UWB (Ultra Wide Band), PHS (Personal Handyphone System), PDC (Personal Digital Cellular), GSM (Global System for Mobile Communications), CDMA (Code Division Multiple Access), W-CDMA (Wideband CDMA), CDMA 2000, and FDM (Orthogonal Frequency Division Multiplexing). Since in this embodiment the wireless device processing portion 1121 is provided in the charging device 1120, wireless communication technologies for short distances of about 1 m, such as Bluetooth, IrDA, and RF-ID are especially suitable among those wireless communication technologies mentioned in the above.

This means that the route for transmitting the telephone number from the mobile terminal 1110 to the charging device 1120 is different from the embodiment 1. in other respects, the embodiment 2 is the same as the embodiment 1.

### Embodiment 3

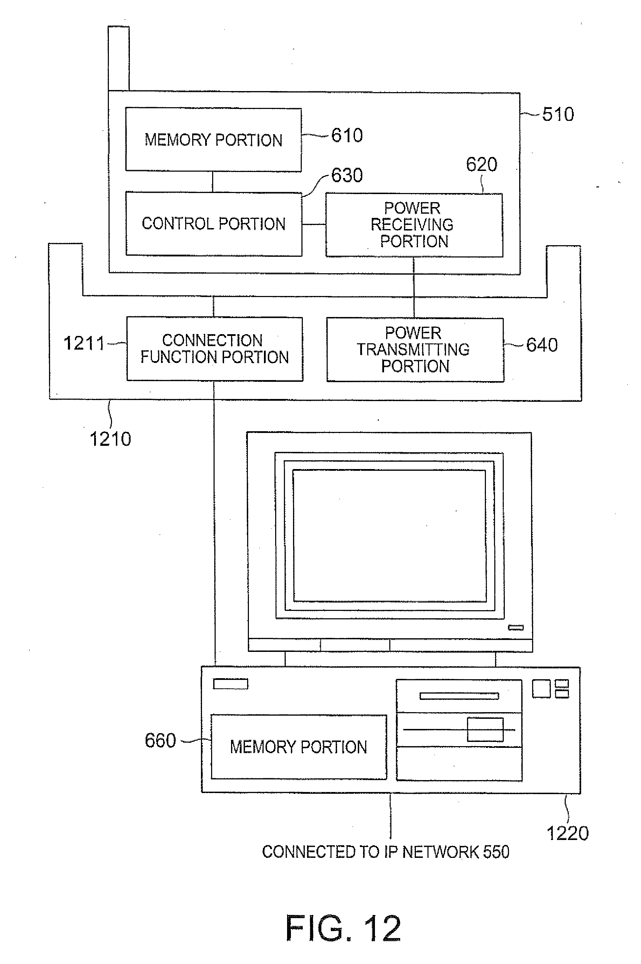

An embodiment 3 will be described with reference to Fig. 12. While the embodiment 1 employs the charging device 520 shown in Fig. 7, the embodiment 3 instead employs a charging device 1210 and a personal computer 1220. The mobile terminal 510 is the same as that in the embodiment 1.

The charging device 1210 has no memory portion 660. The charging device 1210 has a connection function portion 1211 instead of the network function portion 650. The connection function portion 1211 transmits a telephone number received from the control portion 630 to the personal computer 1220. The personal computer 1220 transmits to the server 530 the received telephone number and the IP address stored in the memory portion 660, via the IP network 550.

### Embodiment 4

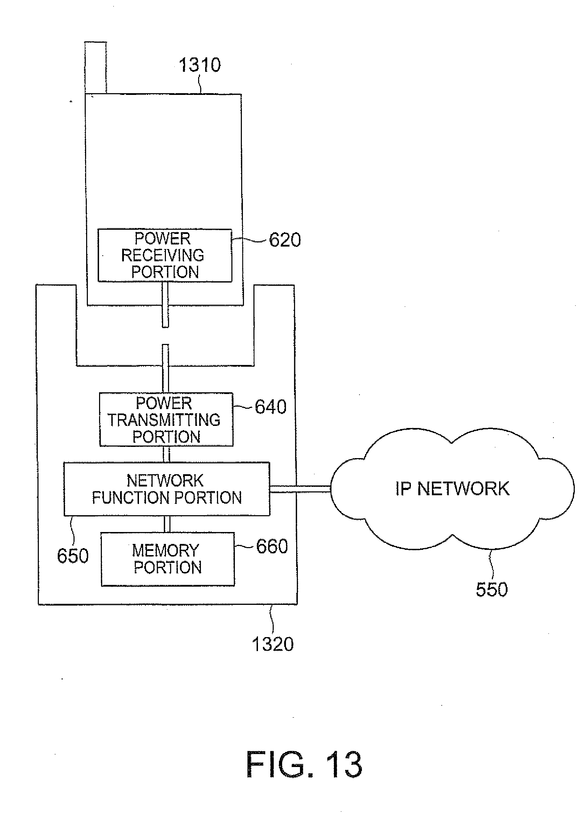

An embodiment 4 will be described with reference to Fig. 13. The embodiment 4 employs a mobile terminal 1310 and a charging device 1320 instead of the mobile terminal 510 and the charging device 520 of the embodiment 1.

The mobile terminal 1310 does not output a telephone number to the charging device 1320. The network function portion 650 in the charging device 1320 transmits only the IP address stored in the memory portion 660 to the server 530 via the IP network 550, in response to detection of conduction in the power transmitting portion 640.

Although it is not possible, according to this embodiment, to notify user information of a person present in the vicinity of the charging device 1320, it is possible to notify that there is someone in the vicinity of the charging device 1320. Therefore, it is possible to notify as the presence information whether or not there is a vacant seat and the position of the vacant seat, if any.

### Embodiment 5

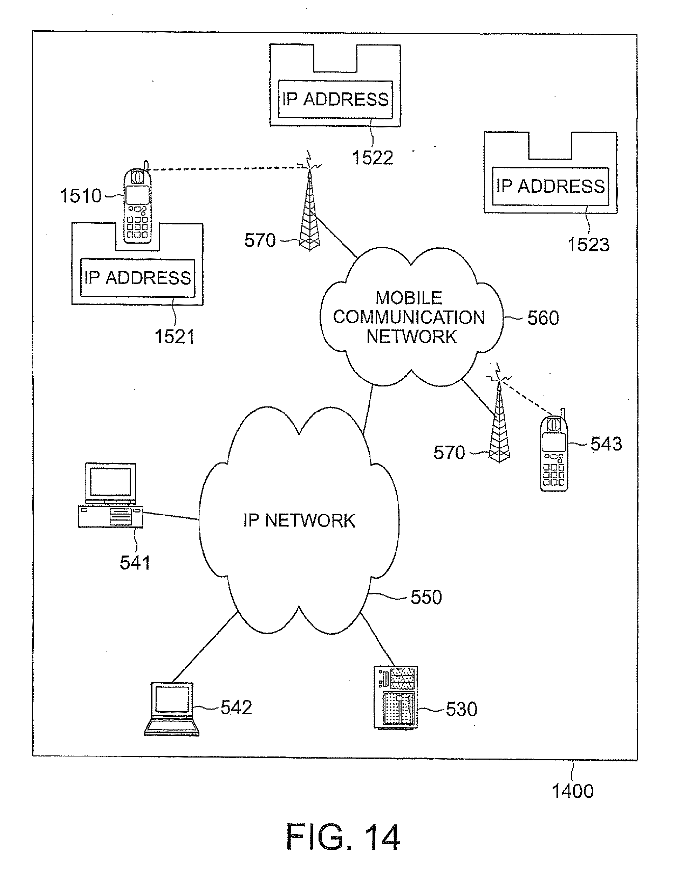

A presence information notification system 1400 according to an embodiment 5 will be described with reference to Fig. 14. The embodiments 1 to 4 correspond to the presence information notification system 100 in which the charging device transmits the IP address or the identifier of the charging device to the server via the IP network, whereas the embodiment 5 corresponds to a presence information notification system 300 in which a mobile terminal 1510 transmits an identifier of a charging device 1520 to the server 530 via the IP network 550.

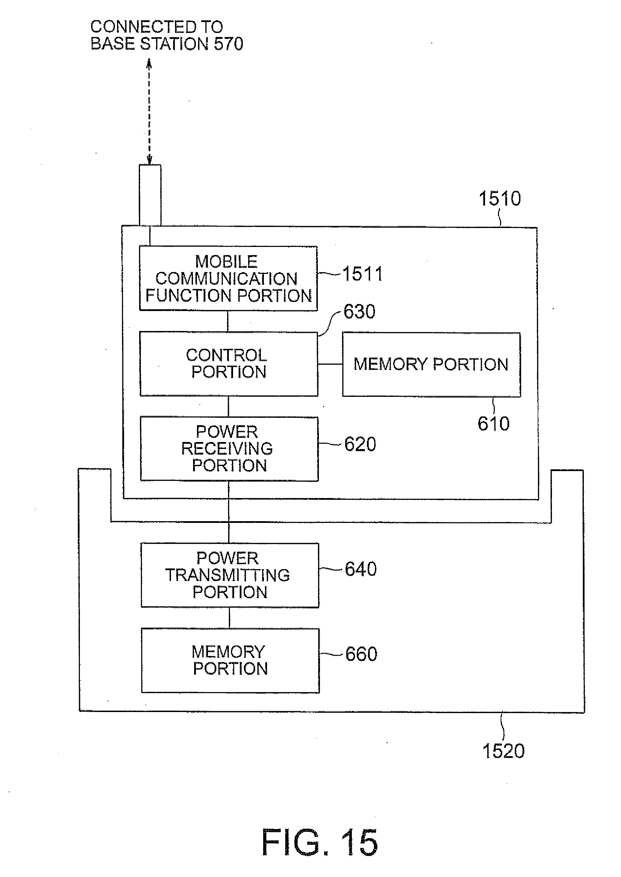

A further description will be made of the mobile terminal 1510 and the charging device 1520 with reference to Fig. 15. The mobile terminal 1510 has a mobile communication function portion 1511 in addition to the memory portion 610, and the power receiving portion 620 described above. The mobile communication function portion 1511 monitors whether the power receiving portion 620 receives power supply or not. When the reception of power is started, the mobile communication function portion 1511 acquires an identifier of the charging device 1520 stored in the memory portion 660 via the contact terminals of the power receiving portion 620 and the power transmitting portion 630, or via data input/output contact terminals provided separately. The acquired identifier of the charging device 1520 and the telephone number of the mobile terminal 1510 itself stored in the memory portion 610 are notified to the server 530 via the base station 570, the mobile communication network 560, and the IP network 550.

### Embodiment 6

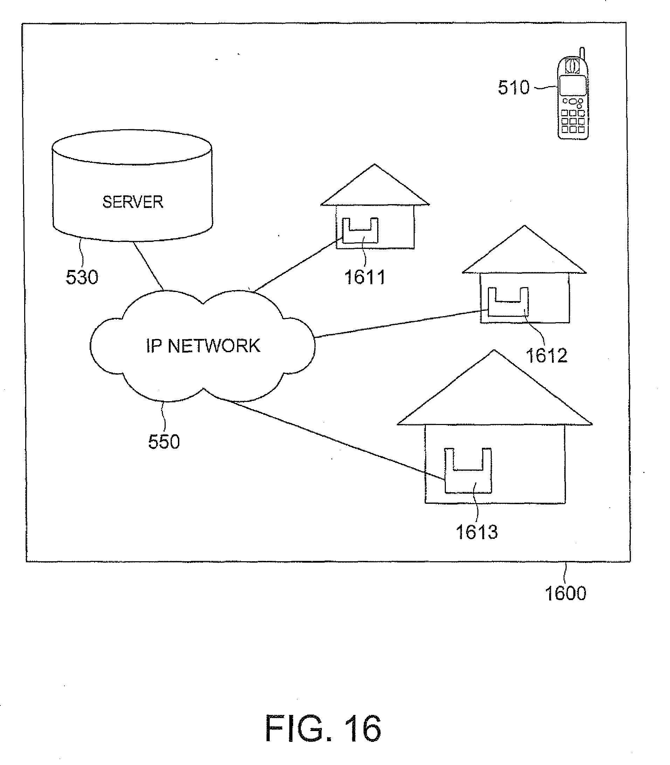

In the embodiments 1 to 5, the positional information contained in the presence information consists of, as shown in Table 1, combinations of names of rooms and departments and serial numbers assigned to the seats in the respective locations. In contrast, according to an embodiment 6, a table as shown in Table 4 in which longitudes and latitudes are used for indicating the positional information, instead of the table in Table 1, is managed by the charging device IP address DB 830. As shown in Fig. 16, the latitude and longitude of each of the charging devices 1611, 1612, 1613, ... installed at separate places from each other (hereafter, generally referred to as the "charging device(s) 1610") are preliminarily measured and the measurement values thus obtained are prestored in the memory portion 650 and preliminarily registered in the charging device IP address DB 830.

**Table 4**

| Charger IP Address | Longitude | Latitude |
|---|---|---|
| 253.36.54.23 | 135.36 | 85.36 |
| 123.45-67.89 | 132.68 | 24.36 |
| 25.369.36.15 | 142.36 | 48.36 |
| ... | ... | ... |
| ... | ... | ... |
| 64.36.21.14 | 135.94 | 45.36 |

According to this embodiment, when the mobile terminal has a GPS function so that presence information is generated and updated by using measurement values obtained by GPS, it will be possible to combine the longitudes and latitudes obtained by the GPS function with positional information based on the longitudes and latitudes obtained by connection to the charging device 1610. This makes it possible to update the presence information even in a place where the GPS positioning is not possible, such as in a room or under the ground.

### Embodiment 7

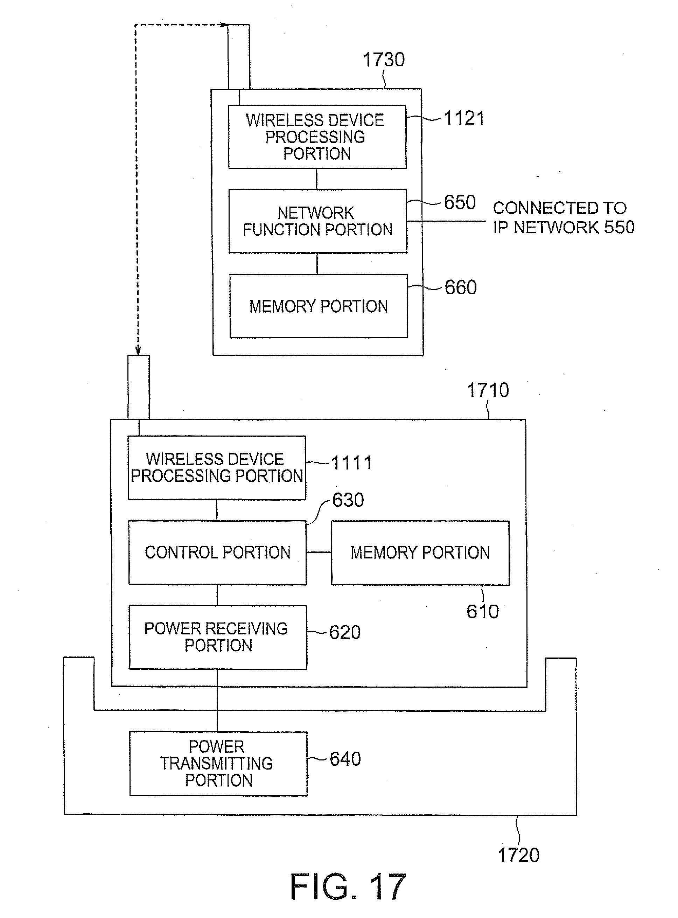

An embodiment 7 will be described with reference to Fig. 17. The embodiment 7, like the embodiments 1 to 4, corresponds to the presence information notification system 100. The embodiment 7 employs a mobile terminal 1710, a charging device 1720, and a wireless base station 1730, instead of the mobile terminal 510 and the charging device 520 employed in the embodiment 1.

The mobile terminal 1710 and the wireless base station 1730 have wireless device processing portions 1111 and 1121, respectively. These wireless device processing portions 1111 and 1121, like those in the embodiment 2, perform wireless data communication with each other by means a wireless communication technology such as Bluetooth, HomeRF, IrDA, RF-ID, and wireless LAN. Since in this embodiment the wireless device processing portion 1121 is provided away from the charging device 1720, those wireless communication technologies for a communication distances of 1 m or more, such as wireless LAN and HomeRF are particularly suitable. The wireless base station 1730 further has a network function portion 650 and a memory portion 660. The charging device 1720 is a typical charging device which performs charging only.

When the mobile terminal 1710 is placed on the charging device 1720, power is supplied from the power transmitting portion 640 to the power receiving portion 620 to perform charging. Upon detecting the conduction in the power receiving portion 620, the control portion 630 reads a telephone number from the memory portion 610 and transmits the telephone number to the wireless base station 1730 by means of the wireless device processing portion 1111.

When the telephone number is received by the wireless device processing portion 1121, the network function portion 650 reads the prestored installed device identifier from the memory portion 660 and transmits the same together with the received telephone number to the server 530 via the IP network 550.

Although the present invention has been described in its preferred aspects, the present invention is not limited to these aspects, and it will be obvious that various changes and modifications are possible within ordinary knowledge of those skilled in the art.

For example, it will be easily understood by those skilled in the art that the present invention is applicable to a private branch exchange system using wireless terminals.

Further, it will be apparent for those skilled in the art that the presence information can be notified even if the power transmitting portion 640 and the power receiving portion 620 are omitted from the charging device described above and the charging function is removed.

## Claims

1. A presence information notification system for notifying a terminal of presence information indicating whether or not a user is present at a predetermined position, the system comprising:
a portable device carried by the user;
an installed device installed at a predetermined position and having a memory device A storing an identifier A for identifying the individual installed device, detection means for detecting the portable device, and means for performing data communication via a data communication network; and
a server having a first memory device storing first association relationship between positional information indicating the position where the installed device is installed and the identifier A of the installed device installed at the position indicated by the positional information, and means for performing data communication via a data communication network, wherein:
the installed device transmits, in response to detection of the portable device, the identifier A of the installed device to the server via the data communication network; and
the server acquires positional information associated with the received identifier A by referring to the first association relationship and notifies the portable terminal of the positional information.

2. The presence information notification system according to claim 1, wherein:
the portable device has a memory device B storing an identifier B for identifying the individual portable device, and means for outputting the identifier B to another device than the portable device;
the installed device further has means for receiving the identifier B output by the portable device in response to detection of the portable device by the detection means, and transmits both the identifiers A and B to the server; and
the server notifies the terminal of the identifier B together with the positional information associated with the received identifier A.

3. A presence information notification system for notifying a terminal of presence information indicating whether or not a user is present at a predetermined position, the system comprising:
an installed device installed at a predetermined position and having a memory device A storing an identifier A for identifying the individual installed device, and means for outputting the identifier A to another device than the installed device;
a portable device carried by a user and having means for receiving the identifier A output from the installed device, means for performing data communication via a data communication network, and detection means for detecting the installed device; and
a server having a first memory device storing first association relationship between positional information indicating a position where the installed device is installed and the identifier A of the installed device installed at the position indicated by the positional information, and means for performing data communication via a data communication network, wherein:
the portable device receives, in response to detection of the installed device, the identifier A from the installed device, and transmits the same to the server via the data communication network; and
the server acquires positional information associated with the received identifier A by referring to the first association relationship and notifies the terminal of the acquired positional information.

4. The presence information notification system according to claim 3, wherein;
the portable device further has a memory device B storing an identifier B for identifying the individual portable device and transmits both the identifiers A and B to the server; and
the server notifies the terminal of the identifier B together with the positional information associated with the received identifier A.

5. The presence information notification system according to claim 2, wherein:
the server comprises a second memory device storing second association relationship between the identifier B and user information preliminarily associated with the identifier B; and
the server acquires the user information associated with the identifier B received from the installed device by referring to the second memory device, and notifies the terminal of the acquired user information and the positional information associated with the identifier A received from the installed device.

6. The presence information notification system according to claim 2, wherein:
the server comprises a second memory device storing second association relationship between the identifier B and user information preliminarily associated with the identifier B; and
the server acquires the user information associated with the identifier B received from the installed device by referring to the second memory device, and notifies the terminal of the acquired user information and the positional information associated with the identifier A received from the installed device.

7. The presence information notification system according to claim 1, wherein:
the server comprises a third memory device storing association relationship between the identifier A and state information indicating a state of the user in the vicinity of the installed device associated with the identifier A; and
the server acquires the state information associated with the identifier A received from the installed device by referring to the third memory device, and notifies the terminal of the acquired state information and the positional information associated with the identifier A received from the installed device.

8. The presence information notification system according to claim 3, wherein:
the server comprises a third memory device storing association relationship between the identifier A and state information indicating a state of the user in the vicinity of the installed device associated with the identifier A; and
the server acquires the state information associated with the identifier A received from the installed device by referring to the third memory device, and notifies the terminal of the acquired state information and the positional information associated with the identifier A received from the installed device.

9. The presence information notification system according to claim 1, wherein:
the portable device further comprises a secondary battery and power receiving means for receiving supply of power for charging the secondary battery from another device; and
the installed device further comprises power transmitting means for supplying power to the power receiving means.

10. The presence information notification system according to claim 3, wherein:
the portable device further comprises a secondary battery and power receiving means for receiving supply of power for charging the secondary battery from another device; and
the installed device further comprises power transmitting means for supplying power to the power receiving means.

11. The presence information notification system according to claim 1, wherein:
the installed device further comprises a stand to place a portable device thereon;
the detection means detects that the portable device is placed at a predetermined position on the stand; and
the power transmitting means and the power receiving means charge the secondary battery in response to the detection by the detection means.

12. The presence information notification system according to claim 3, wherein:
the installed device further comprises a stand to place a portable device thereon;
the detection means detects that the portable device is placed at a predetermined position on the stand; and
the power receiving means and the power transmitting means charge the secondary battery in response to the detection by the detection means.

13. The presence information notification system according to claim 1, wherein the portable device is a mobile communication terminal.

14. The presence information notification system according to claim 3, wherein the portable device is a mobile communication terminal.

15. A presence information notification method of notifying a terminal of presence information indicating whether or not a user is present at a predetermined position, the method using:
a portable device carried by the user;
an installed device installed at a predetermined position;
a server connected to the installed device via a data communication network; and
a terminal connected to the server via a data communication network to receive presence information from the server,
the method comprising:
a step 1 in which association relationship between positional information indicating a position of the installed device and an identifier A prestored in a memory device of the installed device for identifying the individual installed device is registered in the server;
a step 2 in which the installed device detects the portable device;
a step 3 in which the installed device transmits the identifier A to the server in response to detection of the portable device;
a step 4 in which the server acquires positional information associated with the identifier A received from the installed device based on the registered association relationship; and
a step 5 in which the server transmits the acquired positional information to the terminal.

16. The presence information notification method according to claim 15, wherein the portable device further comprises a memory device B storing an identifier B for identifying the individual portable device and means for outputting the identifier B to another device; and
the method further comprises a step in which, prior to the step 3, the installed device receives the identifier B output by the portable device in response to detection of the portable device,
the installed device transmitting, in the step 3, the identifier B together with the identifier A to the server,
the server notifying the terminal, in the step 5, of the identifier B together with the positional information.

17. A presence information notification method of notifying a terminal of presence information indicating whether or not a user is present at a predetermined position, the method using:
a portable device carried by the user;
an installed device installed at a predetermined position, and having means for outputting an identifier A predetermined for identifying the individual device to another device;
a server connected to the installed device via a data communication network; and
a terminal connected to the server via a data communication network to receive presence information from the server,
the method comprising:
a step 1 in which association relationship between positional information indicating a position of the installed device and the identifier A prestored in a memory device of the installed device for identifying the individual installed device is registered in the server;
a step 2 in which the portable device detects the installed device;
a step 3 in which the portable device receives the identifier A output from the installed device and transmits the identifier A to the server;
a step 4 in which the server acquires positional information associated with the identifier A received from the portable device based on the registered association relationship; and
a step 5 in which the server transmits the acquired positional information to the terminal.

18. The presence information notification method according to claim 17, wherein:
the portable device further comprises a memory device B storing an identifier B for identifying the individual portable device;
the portable device transmits, in the step 3, the identifier B together with the identifier A to the server; and
the server notifies the terminal, in the step 5, of the identifier B together with the positional information.

19. The presence information notification method according to claim 16, wherein:
association relationship between the identifier B and user information preliminarily associated with the identifier B is further registered in the server in the step 1;
the server acquires, in the step 4, the user information associated with the identifier B based on the registered association relationship; and
the server notifies the terminal, in the step 5, of the user information together with the positional information.

20. The presence information notification method according to claim 18 wherein;
association relationship between the identifier B and user information preliminarily associated with the identifier B is further registered in the server in the step 1;
the server acquires, in the step 4, the user information associated with the identifier B based on the registered association relationship; and
the server notifies the terminal, in the step 5, of the user information together with the positional information.

21. The presence information notification method according to claim 15, wherein:
association relationship between the identifier A and state information indicating a state of the user in the vicinity of the installed device preliminarily associated with the identifier A is further registered in the server in the step 1;
the server acquires, in the step 4, the state information associated with the identifier A based on the registered association relationship; and
the server notifies the terminal, in the step 5, of the state information together with the positional information.

22. The presence information notification method according to claim 17, wherein:
association relationship between the identifier A and state information indicating a state of the user in the vicinity of the installed device preliminarily associated with the identifier A is further registered in the server in the step 1;
the server acquires, in the step 4, the state information associated with the identifier A based on the registered association relationship; and
the server notifies the terminal, in the step 5, of the state information together with the positional information.

23. The presence information notification method according to claim 15 wherein:
the portable device comprises a secondary battery and power receiving means for receiving supply of power for charging the secondary battery from another device;
the installed device comprises power transmitting means for supplying power to the power receiving means; and
the power receiving means and the power transmitting means start charging the secondary battery in response to the detection in the step 2.

24. The presence information notification method according to claim 17, wherein:
the portable device comprises a secondary battery and power receiving means for receiving supply of power for charging the secondary battery from another device;
the installed device comprises power transmitting means for supplying power to the power receiving means; and
the power receiving means and the power transmitting means start charging the secondary battery in response to the detection in the step 2.

25. The presence information notification method according to claim 15, wherein the portable device is a mobile communication terminal.

26. The presence information notification method according to claim 17, wherein the portable device is a mobile communication terminal.

27. In a computer program causing a computer to execute processing for notifying a terminal of presence information indicating whether or not a user is present at a predetermined position via a data communication network,
the program being a program for causing a computer to execute processing in which a portable device carried by the user is associated with an installed device installed at a predetermined position and having a memory device A storing an identifier A for identifying the individual installed device, detection means for detecting the portable device, and means for performing data communication via a data communication network,
the computer program being **characterized by** causing a computer to execute:
processing 1 of receiving the identifier A transmitted by the installed device via the data communication network in response to detection of the portable device;
processing 2 of acquiring positional information associated with the received identifier A from a first memory device storing association relationship between positional information indicating a position where the installed device is installed and the identifier A of the installed device installed at the position indicated by the positional information; and
processing 3 of transmitting the acquired positional information to the terminal via the data communication network.

28. The computer program according to claim 27, wherein:
the portable device comprises a memory device B storing an identifier B for identifying the individual portable device and means for outputting the identifier B to another device;
the installed device further comprises means for receiving the identifier B output from the portable device in response to detection of the portable device by the detection means, and transmits both the identifiers A and B to the server; and
the computer program causes the computer to execute:
the processing 1 of receiving from the installed device the identifier B together with the identifier A; and
the processing 3 of transmitting to the terminal the identifier B together with the positional information.

29. In a computer program causing a computer to execute processing for notifying a terminal of presence information indicating whether or not a user is present at a predetermined position via a data communication network,
the program being a program for causing a computer to execute processing in which an installed device installed at a predetermined position and having a memory device A storing an identifier A for identifying the individual installed device and means for outputting the identifier A to another device is associated with a portable device carried by the user and having means for receiving the identifier A output from the installed device, means for performing data communication via a data communication network and detection means for detecting the installed device,
the computer program causing a computer to execute:
processing 1 of receiving the identifier A transmitted via the installed device, the portable device, and the data communication network;
processing 2 of acquiring positional information associated with the received identifier A from a first memory device storing association relationship between positional information indicating a position where the installed device is installed and the identifier A of the installed device installed at the position indicated by the positional information; and
processing 3 of transmitting the acquired positional information to the terminal via the data communication network.

30. The computer program according to claim 29, wherein:
the portable device further comprises a memory device B storing an identifier B for identifying the individual portable device, and transmits both the identifiers A and B to the server; and
the computer program causes the computer to execute:
the processing 1 of receiving from the portable device the identifier B together with the identifier A; and
the processing 3 of transmitting to the terminal the identifier B together with the positional information.

31. The computer program according to claim 28, causing the computer to execute:
the processing 2 of acquiring user information associated with the identifier B received in the processing 1 from a second memory device storing association relationship between the identifier B and the user information preliminarily associated with the identifier B; and
the processing 3 of transmitting the positional information and the user information to the terminal.

32. The computer program according to claim 30, causing the computer to execute:
the processing 2 of acquiring user information associated with the identifier B received in the processing 1 from a second memory device storing association relationship between the identifier B and the user information preliminarily associated with the identifier B; and
the processing 3 of transmitting the positional information and the user information to the terminal.

33. The computer program according to claim 27, causing the computer to execute:
the processing 2 of acquiring state information associated with the identifier A received in the processing 1 from a second memory device storing association relationship between the identifier A and state information indicating a state of the user in the vicinity of the installed device preliminarily associated with the identifier A; and
the processing 3 of transmitting the positional information and the state information to the terminal.

34. The computer program according to claim 29, causing the computer to execute:
the processing 2 of acquiring state information associated with the identifier A received in the processing 1 from a second memory device storing association relationship between the identifier A and state information indicating a state of the user in the vicinity of the installed device preliminarily associated with the identifier A; and
the processing 3 of transmitting the positional information and the state information to the terminal.

35. A portable device charging system comprising a portable device carried by a user and having a secondary battery, and a charging device for supplying power to the portable device for charging the secondary battery, wherein:
the charging device is a device installed at a predetermined position, and further comprises a memory device A storing an identifier A for identifying the individual installed device, means for receiving an identifier B output from the portable device, and communication means for communicating via a data communication network;
the portable device further comprises a memory device B storing the identifier B for identifying the individual portable device, and means for outputting the identifier B to the charging device; and
the charging device, while supplying power to the portable device, transmits the identifiers A and B to a predetermined destination on the data communication network upon receiving the identifier B from the portable device.

36. A portable device charging system comprising a portable device carried by a user and having a secondary battery, and a charging device for supplying power to the portable device for charging the secondary battery, wherein:
the charging device is a device installed at a predetermined position, and further comprises a memory device A storing an identifier A for identifying the individual installed device, and means for outputting an identifier B to the portable device;
the portable device further comprises a memory device B storing the identifier B for identifying the individual portable device, means for receiving the identifier A from the charging device, and communication means for communicating via the data communication network; and
the portable device, while receiving supply of power from the charging device, transmits the identifiers A and B to a predetermined destination on the data communication network upon receiving the identifier A from the charging device.

37. The portable device charging system according to claim 35, wherein:
the charging device further comprises a stand to place the portable device thereon; and
the charging device starts supplying power for charging in the condition where the portable device is placed at a predetermined position on the stand, and receives the identifier B from the portable device.

38. The portable device charging system according to claim 36, wherein:
the charging device further comprises a stand to place the portable device thereon; and
the charging device starts supplying power for charging in the condition where the portable device is placed at a predetermined position on the stand, while the portable device receives the identifier A from the charging device.

39. The portable device charging system according to claim 35, wherein the portable device is a mobile communication terminal.

40. The portable device charging system according to claim 36, wherein the portable device is a mobile communication terminal.

41. A charging device for supplying power to a portable device carried by a user and having a secondary battery, for charging the secondary battery, wherein
the charging device is an installed device installed at a predetermined position, and comprises a memory device A storing an identifier A for identifying the individual installed device, and communication means for communicating via a data communication network; and
the charging device, while supplying power to the portable device, transmits identifier A to a predetermined destination on the data communication network.

42. The charging device according to claim 41, wherein:
the charging device is used together with a portable device comprising a memory device B storing an identifier B for identifying the individual portable device and means for outputting the identifier B to the charging device;
the charging device further comprises means for receiving the identifier B from the portable device; and
the charging device, while supplying power to the portable device, transmits the identifiers A and B to a predetermined destination on the data communication network.

43. The charging device according to claim 41 , wherein:
the charging device further comprises a stand to place the portable device thereon; and
the charging device, while supplying charging power to the portable device, receives the identifier B from the portable device, in the condition where the portable device is placed at a predetermined position on the stand.

44. The charging device according to claim 41, wherein the portable device is a mobile communication terminal.

45. A portable device to be used by being carried by a user, comprising:
means for receiving an identifier A from an installed device having a memory device A storing the identifier A for identifying the individual installed device and means for outputting the identifier A;
means for performing communication via a data communication network; and
detection means for detecting the installed device,
wherein the portable device transmits the identifier A received from the installed device to a predetermined destination on the data communication network, in response to the detection of the installed device.

46. The portable device according to claim 45, further comprising a secondary battery as a drive power source, wherein the installed device is a charging device which supplies power to the portable device to charge the secondary battery, and the detection means detects the installed device in response to the supply of the charging power.

47. The portable device according to claim 45, being a mobile communication terminal.

48. A presence information notification system for notifying a terminal of presence information indicating whether or not a user is present at a predetermined position, comprising:
an installed device having a first wireless data communication means for performing wireless data communication, data communication means for performing data communication via a data communication network, and a memory device A storing an identifier A for identifying the individual installed device;
a trigger device arranged at a predetermined position in association with the installed device;
a portable device having detection means for detecting the trigger device, and second wireless data communication means for performing wireless data communication with the first wireless data communication; and
a server having a first memory device storing first association relationship between positional information indicating the position where the trigger device is installed and the identifier A of the installed device associated with the trigger device installed at the position indicated by the positional information, and means for performing data communication via a data communication network, wherein:
the portable device transmits detection of the trigger device to the installed device by means of wireless data communication;
the installed device notified of the detection of the trigger device transmits, to the server, the identifier A of the installed device via the data communication network; and
the server acquires positional information associated with the identifier A by referring to the first association relationship and notifies the terminal of the acquired positional information.

49. A presence information notification method of notifying a terminal of presence information indicating whether or not a user is present at a predetermined position, the method using:
a portable device carried by the user;
an installed device;
a trigger device installed at a predetermined position in association with the installed device;
a server connected to the installed device via a data communication network; and
a terminal connected to the server via a data communication network to receive the presence information from the server,
the method comprising:
a step 1 in which association relationship between positional information indicating the position of the trigger device and an identifier A prestored in a memory device of the installed device for identifying the individual installed device is registered in the server,;
a step 2 in which the portable device detects the trigger device;
a step 3 in which detection of the trigger device is notified by the portable device to the installed device;
a step 4 in which the installed device transmits the identifier A to the server in response to notification of the detection of the trigger device;
a step 5 in which the server acquires positional information associated with the identifier A received from the installed device according to the registered association relationship; and
a step 6 in which the acquired positional information is transmitted by the server to the terminal.

50. In a computer program causing a computer to execute processing of notifying a terminal of presence information indicating whether or not a user is present at a predetermined position, via a data communication network, the program being designed to cause a computer connected to an installed device via a data communication network to execute processing in which the installed device, a trigger device installed at a predetermined position in association with the installed device, a portable device carried by the user and notifying the installed device of detection of the trigger device, and the terminal connected to the server via the data communication network and receiving the presence information from the server are linked with one another, the program being **characterized by** causing the computer to execute:
processing of registering in the server association relationship between positional information indicating the position of the trigger device and an identifier A prestored in a memory device of the installed device for identifying the individual installed device;
processing of receiving the identifier A transmitted by the installed device in response to notification of the detection of the trigger device from the portable device;
processing of acquiring positional information associated with the identifier A received from the installed device according to the registered association relationship; and
processing of transmitting the acquired positional information to the terminal via the data communication network.
